# EUROPEAN PATENT SPECIFICATION

(11) **EP 1 922 939 B1**
(45) Date of publication and mention of the grant of the patent: **26.05.2010**
(21) Application number: 06810065.0
(22) Date of filing: 06.09.2006
(51) Int. Cl.: A23L 1/318, A23L 1/31, A23L 1/314, A23L 1/03, A23L 1/0532

(54) **PROCESS FOR PRODUCING AN ALBUMEN FREE WHOLE MEAT PRODUCT AND SAID PRODUCT**
VERFAHREN ZUR HERSTELLUNG VON ALBUMENFREIEM FLEISCHPRODUKT UND DESSEN PRODUKT
PROCÉDÉ DE FABRICATION D'UNE VIANDE SANS D'ALBUMINE ET LEDIT PRODUIT

(30) Priority: 08.09.2005 JP 2005260282
(43) Date of publication of application: 21.05.2008
(73) Proprietor: Ajinomoto Co., Inc., Tokyo 104-8315 (JP)
(72) Inventor: KATSUTA, Yuuki, Kawasaki-shi, Kanagawa 2108681 (JP); HIROSE, Fumiyuki, Kawasaki-shi, Kanagawa 2108681 (JP)
(74) Representative: Strehl Schübel-Hopf & Partner
(86) International application number: PCT/JP2006/318100
(87) International publication number: WO 2007/029867

(56) References cited:
- JP-A- 07 255 426
- JP-A- 10 191 935
- JP-A- 11 127 794
- JP-A- 2004 283 173
- JP-A- 2005 021 140
- US-A1- 2003 077 358
- Z. PIETRASIK, A. JARMOLUK: "Effect of Sodium Caseinate and K-carrageenan on Binding and Textural Properties of Pork Muscle Gels Enhanced by Microbial Transglutaminase Addition" FOOD RESEARCH INTERNATIONAL, vol. 36, 2003, pages 285-294, XP002530806
- Z. PIETRASIK, E. C. Y. LI-CHAN: "Binding and Textural Properties of Beef Gels as Affected by Protein, Kappa-caraageenan and Microbial Transglutaminase Addition" FOOD RESEARCH INTERNATIONAL, vol. 35, 2002, pages 91-98, XP002530807
- KURAISHI C ET AL: "TRANSGLUTAMINASE: ITS UTILIZATION IN IN THE FOOD INDUSTRY" FOOD REVIEWS INTERNATIONAL, NEW YORK, NY, US, vol. 2, no. 17, 1 January 2001 (2001-01-01), pages 221-246, XP001070304

## Description

### Technical Field

This invention relates to a process for producing an albumen-free processed meat product and a meat product obtainable by said method.

### Background Art

In general, a single ingredient meat product such as ham, bacon, and roast pork requires a curing treatment which is a process for permeating and diffusing a solution of a curing agent into a raw material meat, and a dry-curing method, a pickling method, and an injection method have been known as the curing treatment. Recently, the pickling method and the injection method are most often employed for the curing treatment. A pickle which is the solution of curing agents used for the curing treatment contains a salt and a color fixing agent as main components, and polyphosphate, ascorbic acid, and the like as well as a seasoning agent, a preservative, a coloring agent, and the like are contained for the purposes of improving an yield, water holding capacity, binding capability, color fixing capability, and the like. Also, for the purposes of improving a water holding capacity, an emulsifying property, and a texture such as hardness and resiliency or a binding property, a pickle containing various protein materials called foreign proteins such as egg white, a whey protein, caseins such as sodium caseinate, and a soy protein is mainly used at present. Further, for the purpose of further improving the texture, transglutaminase (hereinafter sometimes abbreviated to TG) is used for producing a single ingredient meat product (JP-A-7-255426). TG largely improves physical properties of the product as acting not only on a protein of the raw material meat but also on the foreign proteins permeated or injected into the meat via the pickle.

Among the protein materials used for single ingredient meat products, egg white is widely used for the productions of single ingredient meat products such as a ham, bacon, and roast pork in the form of egg white as it is or a powder since egg white has a high heat-induced gelation property. Also, egg white is widely used for the production of a ham, particularly of a loin ham to which a large amount of water is added, since egg white has an effect of improving glossiness on a section of a sliced ham, expression of smoothness (silkiness), and a slicing property which contributes to prevention of damage of ham. Meanwhile, under the circumstances of a rising price of egg white and mandatory allergen labeling, there is a demand for development of a technology for producing a single ingredient meat product without using egg white.

In the production of a single ingredient meat product, though many studies have been conducted on a substitute for phosphate (JP-A-2005-21140), only few studies have been conducted for a substitute for egg white, and a technology for substituting egg white with something else has not been developed. Though Patent Publication 2 discloses a substitution of phosphate and a foreign protein with creatinekinase and glyceraldehyde-dehydrogenase triphosphate, it does not disclose investigation on the substitute for egg white nor the alternative egg white technology which has the effect of expressing glossiness and smoothness on a ham slice section, i.e. the main function of egg white.

### Disclosure of the Invention

An object of this invention is to provide a production method to obtain an egg white-free single ingredient meat product having slice section glossiness, smoothness, slicing property, and texture that are similar to those of a product obtained by using egg white.

The inventors have conducted extensive researches in order to solve the above mentioned problems and found that it is possible to produce an egg white-free single ingredient meat product having slice section glossiness, smoothness, slicing property, and texture that are similar to those of a product obtained by using egg white by using transglutaminase and carrageenan and without using egg white. Specifically, this invention is as follows.
(1) A production method for a processed meat product selected from the group consisting of a ham, bacon, a roast pork and a roast beef which is free from an egg white-derived material and which is produced by processing a block of an edible raw material meat without mincing, wherein a transglutaminase and carrageenan are used.
(2) The production method according to (1) using a pickle containing a transglutaminase and carrageenan and not containing any egg white-derived material.
(3) The production method according to (2) wherein the pickle further contains a soy protein.
(4) A processed meat product obtainable by a method according to any one of (1) to (3).

As an effect of this invention, it is possible to produce, without using egg white, an egg white-free single ingredient meat product having slice section glossiness, smoothness, slicing property, and texture that are similar to those of a product obtained by using egg white.

### Best Mode for Carrying out the Invention

A single ingredient meat product of this invention means a processed meat product that is produced by processing a block of an edible raw material meat such as a beef, a pork, a mutton, a chicken, and a poultry without mincing, and the meat product is selected from a ham, a bacon, a roast pork, and a roast beef.

A production method for a single ingredient meat product free from an egg white-derived material of this invention is characterized by using transglutaminase and carrageenan, and transglutaminase and carrageenan are added to a raw material meat by preparing a pickle using a curing agent containing transglutaminase and carrageenan and employing an ordinary method such as a dry-curing method, a pickling method, and an injection method. Though an amount of water to be added is not particularly limited, effects of this invention are more prominently exhibited when higher amount of added water wherein the amount of added water is 50% or more, preferably 50% to 200%, more preferably 50% to 100% of that of the raw material meat.

Any transglutaminase may be used in this invention regardless of its origin insofar as the transglutaminase has a transglutaminase activity, and examples thereof include a microorganism-derived transglutaminase belonging to streptoverticillium (see JP-A-64-27471), a mammal-derived transglutaminase such as a guinea pig-derived transglutaminase (JP-B-1-50382), a fish-derived transglutaminase such as a codfish-derived transglutaminase (see Nobuo Seki, et al.; Collection of Summaries of Autumn Lecture of Japanese Society of Fisheries Science, 1988; page 167), those obtained by gene recombinant method employing biotechnology (see JP-A-1-300889, JP-A-6-225775), and the like. Among the above transglutaminases, the microorganism-derived transglutaminase may preferably be used for the reasons such as capability of acting without calcium and availability in large amount.

An amount of the transglutaminase to be added may preferably be 3 to 300 units, more preferably 10 to 75 units, per 1 kg of the single ingredient meat product. Alternatively, the additive amount may preferably be 1 to 50 units, more preferably 2 to 30 units, per 100 g of the pickle. An active unit of the transglutaminase in this invention is measured and defined as follows. That is, in a tris buffer solution of a temperature of 37°C and a pH of 6.0, the transglutaminase is caused to act in a reaction system containing benzyloxycarbonyl-L-glutamylglycine and hydroxylamine as bases, and the thus-generated hydroxamic acid is caused to form an iron complex in the presence of trichloroacetic acid, followed by a measurement of absorbance at 525 nm and a detection of a hydroxamic acid amount by a calibration curve, thereby defining an enzyme that generated 1 µmol of hydroxamic acid in one minute as one unit (1U) (see specification of JP-A-64-27471).

The carrageenan to be used in this invention is not particularly limited insofar as it is of a food use grade. A kappa type carrageenan is ordinarily used in productions of processed meat products. An amount of the carrageenan to be added as a dry matter weight may be 0.3 to 45 g, more preferably 0.6 to 13 g, per 1 kg of the single ingredient meat product. Alternatively, the additive amount as a dry matter weight may be 0.03 to 6 g, more preferably 0.1 to 2 g, per 100 g of the pickle.

An egg white-derived material in this invention means egg white as it is and those obtained by processing egg white such as a dried egg white and an egg white concentrate.

In the production method for the single ingredient meat product free from egg white material of this invention, a transglutaminase and a carrageenan are used, and, insofar as egg white-derived material is not used, a soy protein, a milk protein, casein sodium, a plasma protein, a salt, phosphate, nitrite, ascorbate, a sugar, MSG, an umami seasoning such as nucleotides, a spice, and a colorant may be used in combination. Particularly, the combined use of soy protein, milk protein, and casein sodium is preferable.

### Examples

Hereinafter, this invention will be described in more details in conjunction with examples.

### (Example 1)

A frozen pork loin from Denmark was thawed, trimmed, and shaped. After injecting 0.8 kg of a pickle prepared by mixing formulations indicated in Table 1 into 1 kg of the raw material meat, the pickled meat was tumbled overnight at 5°C and then cased in a cellulose casing. The pickled meat was dried at 55°C for 2 hours and at 65°C for 20 minutes and smoked at 65°C for 40 minutes, followed by steaming at 75°C for 2 hours. After cooling the meat at 5°C overnight, the meat was sliced by 1.2 mm-thickness to prepare loin ham. As a transglutaminase preparation, ^{┌}Activa_{┘} TG-H produced by Aj inomoto Co., Inc. was used (1 g of the preparation contains 40 units of transglutaminase and 0.08 g of ammonium chloride). That is, an amount of the transglutaminase added to the transglutaminase added sample was 8 units per 100 g of the pickle. As the carrageenan, SATIAGEL RPI 730 produced by Degussa was used.

**(Table 1)**

| Raw material | Sample | | | | | | | |
|---|---|---|---|---|---|---|---|---|
| | Formulations in Pickle (%) | | | | | | | |
| | 1 | 2 | 3 | 4 | 5 | 6 | 7 | 8 |
| Soy protein (New Fujipro 1700) | 3 | 5 | 5 | 5 | 5 | 5 | 5 | 5 |
| Milk protein (Sunlacto N-5) | 1 | 3.5 | 3.5 | 3.5 | 3.5 | 3.5 | 3.5 | 3.5 |
| Powdered egg white (egg white powder) | 4.5 | - | - | - | - | - | - | - |
| Casein Na (Miprodan CW) | 1 | 1 | 1 | 1 | 1 | 1 | 1 | 1 |
| Salt | 3.5 | 3.5 | 3.5 | 3.5 | 3.5 | 3.5 | 3.5 | 3.5 |
| Phosphate | 0.4 | 0.4 | 0.4 | 0.4 | 0.4 | 0.4 | 0.4 | 0.4 |
| Sodium ascorbate | 0.1 | 0.1 | 0.1 | 0.1 | 0.1 | 0.1 | 0.1 | 0.1 |
| Sodium nitrite | 0.03 | 0.03 | 0.03 | 0.03 | 0.03 | 0.03 | 0.03 | 0.03 |
| Dextrin | 4.5 | 4.5 | 4.5 | 4.5 | 4.5 | 4.5 | 4.5 | 4.5 |
| Granulated sugar | 2.8 | 2.8 | 2.8 | 2.8 | 2.8 | 2.8 | 2.8 | 2.8 |
| MSG | 0.3 | 0.3 | 0.3 | 0.3 | 0.3 | 0.3 | 0.3 | 0.3 |
| Cochineal | 0.1 | 0.1 | 0.1 | 0.1 | 0.1 | 0.1 | 0.1 | 0.1 |
| Water for adjustment | 78.82 | 78.82 | 78.82 | 78.82 | 78.82 | 78.82 | 78.82 | 78.82 |
| ^{┌}Activa_{┘} TG-H | - | - | 0.2 | - | 0.2 | 0.2 | 0.2 | 0.2 |
| Carrageenan (SATIAGEL RPI 730) | - | - | - | 0.5 | 0.5 | - | - | - |
| Curdlan | - | - | - | - | - | 0.2 | - | - |
| Guar gum (Bistop D-20) | - | - | - | - | - | - | 0.5 | - |
| Tamarind gum (Bistop D-2032) | - | - | - | - | - | - | - | 0.5 |

The results of the physical properties measurements and the sensory evaluation results are shown in Table 2. Glossiness was evaluated by visual observation of distinctiveness of glossiness of a section of a slice of the ham, and o means glossy, Δ means slightly glossy, and x means not glossy. Smoothness of the slice section was evaluated by way of texture felt by stroking the section, and omeans smooth, Δ means slightly rough, and x means very rough. Chewing easiness was sensory evaluated by way of a degree of easiness of cutting meat fiber with teeth by chewing the ham, and o means easily cut, Δ means slightly difficult to cut, and x means difficult to cut. Resiliency was sensory evaluated by way of a degree of chewyness by chewing the ham, and o means sufficiently chewy, Δ means slightly insufficient chewyness, and x means not chewy. As to a slicing property, o means good slicing property that causes no damage of ham when slicing, Δ means slightly inferior slicing property, and x means poor slicing property.

As shown in Table 2, by using the transglutaminase and carrageenan in combination, it was possible to prepare the loin ham having the ham slice section glossiness, smoothness, slicing property, and texture that are similar to those of a ham obtained by using egg white. In contrast, those obtained by using transglutaminase alone, carrageenan alone, and a polysaccharide other than carrageenan and transglutaminase in combination failed to satisfactorily substitute for the functions of egg white.

**(Table 2)**

| Sample | Slice section appearance | | Texture | | Physical properties | | Yield | |
|---|---|---|---|---|---|---|---|---|
| | Glossiness | Smoothness | Cuttingeasiness | Resiliency | Slicing property | Tensile strength | Product yield | Natural syneresis |
| 1 | ○ | ○ | ○ | ○ | ○ | 658 g/cm² | 84% | 16% |
| 2 | × | × | × | × | × | 587 | 85 | 16 |
| 3 | Δ | Δ | Δ | ○ | ○ | 603 | 85 | 16 |
| 4 | Δ | Δ | × | × | ○ | 614 | 85 | 16 |
| 5 | ○ | ○ | ○ | ○ | ○ | 655 | 85 | 16 |
| 6 | × | × | ○ | ○ | Δ | Data not obtained | | |
| 7 | × | × | × | × | Δ | | | |
| 8 | × | × | Δ | Δ | Δ | | | |

### Industrial Applicability

According to this invention, it is possible to produce a processed meat product from the group consisting of han, bacon, roast pork and roast beef having glossiness and smoothness on a slice section and a good slicing property without using any egg white-derived material. Therefore, this invention is remarkably useful in the field of food products.

## Claims

1. A production method for a processed meat product selected from the group consisting of a ham, bacon, a roast pork and a roast beef which is free from an egg white-derived material and which is produced by processing a block of an edible raw material meat without mincing, wherein a transglutaminase and carrageenan are used.

2. The production method according to claim 1 using a pickle containing a transglutaminase and carrageenan and not containing any egg white-derived material.

3. The production method according to claim 2 wherein the pickle further contains a soy protein.

4. A processed meat product obtainable by a method according to any one of claims 1 to 3.

## Patentansprüche

1. Verfahren zur Herstellung eines verarbeiteten Fleischprodukts, ausgewählt aus der aus Schinken, Schinkenspeck, Schweinebraten und Roastbeef bestehenden Gruppe, welches frei ist von einem von Eiweiß abgeleiteten Material und das durch Verarbeiten eines Blocks eines essbaren rohen Fleischmaterials ohne Hacken hergestellt wird, wobei eine Transglutaminase und Carrageenan verwendet werden.

2. Verfahren nach Anspruch 1, wobei eine Flüssigkeit zum Einlegen verwendet wird, die Transglutaminase und Carrageenan enthält und keinerlei von Eiweiß abgeleitetes Material enthält.

3. Verfahren nach Anspruch 2, wobei die Flüssigkeit zum Einlegen außerdem ein Sojaprotein enthält.

4. Verarbeitetes Fleischprodukt, erhältlich durch ein Verfahren nach einem der Ansprüche 1 bis 3.

## Revendications

1. Procédé de production d'un produit carné industriel sélectionné dans le groupe constitué d'un jambon, de lard, d'un rôti de porc et d'un rôti de boeuf, lequel est exempt d'une substance dérivée du blanc d'oeuf et qui est produit par traitement d'un bloc d'une viande crue comestible sans mise en hachis, où sont utilisées une transglutaminase et de la carragénine.

2. Procédé de production selon la revendication 1 utilisant une marinade contenant une transglutaminase et de la carragénine et ne contenant pas de substance dérivée du blanc d'oeuf.

3. Procédé de production selon la revendication 2 où la marinade contient en outre une protéine de soja.

4. Produit carné industriel susceptible d'être obtenu par un procédé selon l'une quelconque des revendications 1 à 3.
